(19) Europäisches Patentamt
European Patent Office
Office européen des brevets

(11) **EP 2 821 457 A1**

(12) **EUROPEAN PATENT APPLICATION**

(43) Date of publication:
**07.01.2015 Bulletin 2015/02**

(51) Int Cl.:
**C09K 8/54** (2006.01)          **C09K 8/52** (2006.01)
**C09K 8/528** (2006.01)          **E21B 43/00** (2006.01)

(21) Application number: **14187019.6**

(22) Date of filing: **09.01.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **10.02.2012 US 201213371142**

(62) Document number(s) of the earlier application(s) in accordance with Art. 76 EPC:
**13701688.7 / 2 776 531**

(71) Applicant: **Halliburton Energy Services, Inc.**
**Houston, TX 77072 (US)**

(72) Inventor: **Augsburger, John J.**
**Houston, TX 77072 (US)**

(74) Representative: **Hoffmann Eitle**
**Patent- und Rechtsanwälte PartmbB**
**Arabellastraße 30**
**81925 München (DE)**

Remarks:
This application was filed on 30-09-2014 as a divisional application to the application mentioned under INID code 62.

(54) **A method of treating a well**

(57) The present invention provides a method for treating a portion of a well comprising: forming a treatment fluid, wherein the treatment fluid comprises: (A) water; (B) a formate; (C) a scale inhibitor, wherein the scale inhibitor is capable of providing a pH of less than 9 for a first test fluid consisting essentially of the water, the formate and the scale inhibitor; and (D) a corrosion inhibitor capable of providing (i) a pH of at least 10, and (ii) a corrosion rate equal to or less than 9 mils per year (mpy) $(7.25 \times 10^{-12}$ m/s) under testing conditions consisting of (a) a temperature of 300°F (148.9°C), (b) a pressure of 500 psi (3.4 MPa), and (c) a time of 28 days, for a second test fluid consisting essentially of the water, the formate, the scale inhibitor and the corrosion inhibitor, and in the same proportions as in the treatment fluid, whereas the first test fluid has a corrosion rate greater than 9 mpy $(7.25 \times 10^{-12}$ m/s) under the testing conditions; and introducing the treatment fluid into the well.

## Description

### Cross-Reference to Related Application

This application claims priority to US Application No. 13/371,142, filed February 10, 2012.

### Technical Field

A treatment fluid and methods of use are provided. The treatment fluids include a corrosion inhibitor of a weak base. According to an embodiment, the treatment fluid is for use in an environment containing carbon dioxide and/or hydrogen sulfide gases. According to another embodiment, the treatment fluids include a scale inhibitor and the corrosion inhibitor.

### Summary

According to an embodiment, a treatment fluid comprises: water; a formate; and a corrosion inhibitor, wherein the corrosion inhibitor is capable of providing: (A) a pH of at least 10 under a testing condition of at least 100 psi (0.7 MPa) carbon dioxide; and (B) a corrosion rate equal to or less than 4 mils per year under testing conditions consisting of: (i) a temperature of 300 °F (148.9 °C); (ii) a total pressure of 500 psi (3.4 MPa), wherein carbon dioxide accounts for at least 100 psi (0.7 MPa) of the total pressure; and (iii) a time of 28 days, for a test fluid consisting essentially of: the water; the formate; and the corrosion inhibitor, and in the same proportions as in the treatment fluid, whereas a substantially identical test fluid without the corrosion inhibitor has a pH of less than 10 and a corrosion rate of greater than 4 mils per year under the testing conditions.

According to another embodiment, a method of treating a portion of a well comprises: forming the treatment fluid; and introducing the treatment fluid into the well.

According to another embodiment, a method of treating a portion of a well comprises: forming a treatment fluid, wherein the treatment fluid comprises: (A) water; (B) a formate; (C) a scale inhibitor, wherein the scale inhibitor is capable of providing a pH of less than 9 for a first test fluid consisting essentially of: the water; the formate; and the scale inhibitor; and (D) a corrosion inhibitor, wherein the corrosion inhibitor is capable of providing: (i) a pH of at least 10; and (ii) a corrosion rate equal to or less than 9 mils per year under testing conditions consisting of: (a) a temperature of 300 °F (148.9 °C); (b) a pressure of 500 psi (3.4 MPa); and (c) a time of 28 days, for a second test fluid consisting essentially of: the water; the formate; the scale inhibitor; and the corrosion inhibitor, and in the same proportions as in the treatment fluid, whereas the first test fluid has a corrosion rate of greater than 9 mils per year under the testing conditions; and introducing the treatment fluid into the well.

### Detailed Description of the Invention

As used herein, the words "comprise," "have," "include," and all grammatical variations thereof are each intended to have an open, non-limiting meaning that does not exclude additional elements or steps.

As used herein, the words "consisting essentially of," and all grammatical variations thereof are intended to limit the scope of a claim to the specified materials or steps and those that do not materially affect the basic and novel characteristic(s) of the claimed invention. For example, the test fluid consists essentially of: the water; the formate; and the corrosion inhibitor, and in the same proportions as in the treatment fluid. The test fluid can contain other ingredients so long as the presence of the other ingredients do not materially affect the basic and novel characteristics of the claimed invention, i.e., so long as the corrosion inhibitor is capable of providing: (A) a pH of at least 10 under a testing condition of at least 100 psi (0.7 MPa) carbon dioxide; and (B) a corrosion rate equal to or less than 4 mils per year under testing conditions consisting of: (i) a temperature of 300 °F (148.9 °C); (ii) a total pressure of 500 psi (3.4 MPa), wherein carbon dioxide accounts for at least 100 psi (0.7 MPa) of the total pressure; and (iii) a time of 28 days, for the test fluid.

It should also be understood that, as used herein, "first," "second," and "third," are assigned arbitrarily and are merely intended to differentiate between two or more test fluids, etc., as the case may be, and does not indicate any sequence. Furthermore, it is to be understood that the mere use of the word "first" does not require that there be any "second," and the mere use of the word "second" does not require that there be any "third," etc.

As used herein, a "fluid" is a substance having a continuous phase that tends to flow and to conform to the outline of its container when the substance is tested at a temperature of 71 °F (22 °C) and a pressure of one atmosphere "atm" (0.1 megapascals "MPa"). A fluid can be a liquid or gas. A homogenous fluid has only one phase; whereas a heterogeneous fluid has more than one distinct phase. A solution is an example of a homogenous fluid, containing a solvent (e.g., water) and a solute. A colloid is an example of a heterogeneous fluid. A colloid can be: a slurry, which includes a continuous liquid phase and undissolved solid particles as the dispersed phase; an emulsion, which includes a continuous liquid phase and at least one dispersed phase of immiscible liquid droplets; a foam, which includes a continuous liquid phase and a gas as the dispersed phase; or a mist, which includes a continuous gas phase and liquid droplets as the dispersed phase. As used herein, the term "emulsion" means a colloid in which an aqueous liquid is the continuous (or external) phase and a hydrocarbon liquid is the dispersed (or internal) phase. Of course, there can be more than one internal phase of the emulsion, but only one external phase. For example, there can be an external phase which is adjacent to a first internal phase, and the first internal phase can be adjacent to a second internal phase. Any of the phases of an emulsion can contain dissolved materials and/or undissolved solids.

Oil and gas hydrocarbons are naturally occurring in some subterranean formations. A subterranean formation containing oil or gas is sometimes referred to as a reservoir. A reservoir may be located under land or off shore. Reservoirs are typically located in the range of a few hundred feet (shallow reservoirs) to a few tens of thousands of feet (ultra-deep reservoirs). In order to produce oil or gas, a wellbore is drilled into a reservoir or adjacent to a reservoir.

A well can include, without limitation, an oil, gas or water production well, an injection well, or a geothermal well. As used herein, a "well" includes at least one wellbore. A wellbore can include vertical, inclined, and horizontal portions, and it can be straight, curved, or branched. As used herein, the term "wellbore" includes any cased, and any uncased, open-hole portion of the wellbore. A near-wellbore region is the subterranean material and rock of the subterranean formation surrounding the wellbore. As used herein, a "well" also includes the near-wellbore region. The near-wellbore region is generally considered to be the region within about 100 feet of the wellbore. As used herein, "into a well" means and includes into any portion of the well, including into the wellbore or into the near-wellbore region via the wellbore.

A portion of a wellbore may be an open hole or cased hole. In an open-hole wellbore portion, a tubing string may be placed into the wellbore. The tubing string allows fluids to be introduced into or flowed from a remote portion of the wellbore. In a cased-hole wellbore portion, a casing is placed into the wellbore which can also contain a tubing string. A wellbore can contain an annulus. Examples of an annulus include, but are not limited to: the space between the wellbore and the outside of a tubing string in an open-hole wellbore; the space between the wellbore and the outside of a casing in a cased-hole wellbore; and the space between the inside of a casing and the outside of a tubing string in a cased-hole wellbore.

Many components of a well are made from metals or metal alloys. These components are susceptible to corrosion. Corrosion is the wearing away of metals due to a chemical reaction. Corrosion can occur in a variety of ways, for example, when the metal is exposed to oxygen in the surrounding environment or when the metal is in contact with a fluid having a low enough pH, for example a pH in the acidic range. Corrosion of metal well components can be quite detrimental to oil or gas operations.

During wellbore operations, it is common to introduce a treatment fluid into the well. Examples of common treatment fluids include, but are not limited to, drilling fluids, spacer fluids, completion fluids, and work-over fluids. As used herein, a "treatment fluid" is a fluid designed and prepared to resolve a specific condition of a well or subterranean formation, such as for stimulation, isolation, gravel packing, or control of gas or water coning. The term "treatment fluid" refers to the specific composition of the fluid as it is being introduced into a well. The word "treatment" in the term "treatment fluid" does not necessarily imply any particular action by the fluid.

Scale can build up on wellbore equipment, including tubulars and other metal surfaces. As used herein, the term "scale" means a deposit or coating formed on the surface of material, such as metal or rock. Scale is caused by a precipitation due to a chemical reaction with the surface of the material, precipitation caused by chemical reactions, a change in pressure or temperature, or a change in the composition of a solution. Common scales are calcium carbonate, calcium sulfate, barium sulfate, strontium sulfate, iron sulfide, iron oxides, iron carbonate, the various silicates and phosphates and oxides, or any of a number of compounds that are insoluble or slightly soluble in water.

A treatment fluid can include a scale inhibitor to reduce or eliminate scale formation or to remove scale build-up. A scale inhibitor can function to lower the pH of the fluid. This lower pH can help prevent scale formation or "eat" away scale build-up.

However, it is not uncommon for a treatment fluid to cause corrosion to metal well components. By way of example, a treatment fluid that contains a scale inhibitor can have a low enough pH such that corrosion occurs. By way of another example, a treatment fluid containing a formate can cause corrosion. A formate can be a formate salt or an ester formate. A formate salt is a salt of formic acid, and an ester formate is an ester of formic acid. Formates are commonly used in treatment fluids as a weighting agent to increase the density of the treatment fluid. However, these formates can cause corrosion because addition of the formate can lower the pH of the treatment fluid.

Moreover, the pH of the treatment fluid can be decreased even further if a fluid containing a formate is introduced into an acid gas well or sour gas well. An acid gas well is a well containing high amounts of an acid gas, such as carbon dioxide gas, and a sour gas well is a well containing high amounts of a sour gas, such as hydrogen sulfide gas. The pH of a treatment fluid containing a formate can decrease substantially if introduced into an acid gas well or sour gas well. It can be impossible or difficult to predict the exact amount, if any, of carbon dioxide or hydrogen sulfide present in a particular well. Therefore, it is common to include a corrosion inhibitor in treatment fluids that either have or may have a pH low enough to cause corrosion.

A need therefore exists for a corrosion inhibitor that can be used in a treatment fluid containing a formate, wherein the treatment fluid is introduced into a well that may be an acid gas or sour gas well. A need also exists for a corrosion inhibitor that can be used in a treatment fluid containing a formate and a scale inhibitor.

As used herein the "corrosion rate" of a material is tested according to the following procedure. A test fluid is mixed by adding all ingredients to a mixing container. The pH of the test fluid is adjusted to a desired pH and the container is placed on a mixer base. The motor of the base is then turned on and maintained at 4,000 revolutions per minute (rpm) for 35 s (+/- 1 s). It is to be understood that the test fluid is mixed at ambient temperature and pressure (about 71 °F (22 °C) and about 1 atm (0.1 MPa)). It is to be understood that the temperature and pressure of the test fluid is ramped up to the specified temperature and pressure after being mixed at ambient temperature and pressure. For example, the test fluid can be mixed at 71 °F (22 °C) and 1 atm (0.1 MPa) and then placed into the testing apparatus and the temperature of the treatment fluid can be ramped up to the specified temperature. As used herein, the rate of ramping up the temperature is in the range of about 3 °F/min to about 5 °F/min (about 1.67 °C/min to about 2.78 °C/min). The purpose of the specific rate of temperature ramping during measurement is to simulate the temperature profile experienced by the test fluid as it is being pumped downhole. After the test fluid is ramped up to the specified temperature and specified pressure, the treatment fluid is maintained at that temperature and pressure for the duration of the testing. At least one clean and dry metal plate is weighed to the nearest 1/10 of a milligram (mg) to determine the first weight. The metal is selected based on the particular metal of interest. The metal can also be a metal alloy. The at least one metal plate is then threaded onto a Teflon® rod. The metal plate(s) and rod are placed into the container such that the rod is on the bottom of the container and the plate(s) is in a vertical position so the plate has limited or no contact with the inside of the container. The required volume of test fluid is poured into the container gently, down the side of the container so no air bubbles are trapped around the plate assembly. The required volume of fluid to plate surface area ratio is 20 milliliters/inches$^2$ (mL/in$^2$). The container is inserted into a static aging cell and a Teflon® lid is placed over the container. The aging cell is pressurized to the specified pressure with one or more gases and tested for leaks. The aging cell is placed into an oven at the specified temperature for the specified time. The aging cell is allowed to cool for at least one hour. The metal plate(s) is removed from the container and test fluid. The plate(s) is disassembled from the rod and corrosion products are removed. The plate(s) are dried and weighed to the nearest 1/10 of a mg to determine the second weight. The corrosion rate (CR) is calculated for each plate as follows, expressed in units of mils per year lost (mpy), wherein "mils" is defined as 1/1,000 of an inch:

$$CR = \frac{(534)\ (1000)\ (WL)}{(SG)\ (SA)\ (T)}$$

where: WL = weight loss in grams; SG = specific gravity of plate; SA = surface area of plate in inches$^2$; T = time in hours; and 534 is a conversion constant for units of mils per year.

According to an embodiment, a treatment fluid comprises: water; a formate; and a corrosion inhibitor, wherein the corrosion inhibitor is capable of providing: (A) a pH of at least 10 under a testing condition of at least 100 psi (0.7 MPa) carbon dioxide; and (B) a corrosion rate equal to or less than 4 mils per year under testing conditions consisting of: (i) a temperature of 300 °F (148.9 °C); (ii) a total pressure of 500 psi (3.4 MPa), wherein carbon dioxide accounts for at least 100 psi (0.7 MPa) of the total pressure; and (iii) a time of 28 days, for a test fluid consisting essentially of: the water; the formate; and the corrosion inhibitor, and in the same proportions as in the treatment fluid, whereas a substantially identical test fluid without the corrosion inhibitor has a pH of less than 10 and a corrosion rate of greater than 4 mils per year under the testing conditions.

According to another embodiment, a method of treating a portion of a well comprises: forming the treatment fluid; and introducing the treatment fluid into the well.

According to another embodiment, a method of treating a portion of a well comprises: forming a treatment fluid, wherein the treatment fluid comprises: (A) water; (B) a formate; (C) a scale inhibitor, wherein the scale inhibitor is capable of providing a pH of less than 9 for a first test fluid consisting essentially of: the water; the formate; and the scale inhibitor; and (D) a corrosion inhibitor, wherein the corrosion inhibitor is capable of providing: (i) a pH of at least 10; and (ii) a corrosion rate equal to or less than 9 mils per year under testing conditions consisting of: (a) a temperature of 300 °F (148.9 °C); (b) a pressure of 500 psi (3.4 MPa); and (c) a time of 28 days, for a second test fluid consisting essentially of: the water; the formate; the scale inhibitor; and the corrosion inhibitor, and in the same proportions as in the treatment fluid, whereas the first test fluid has a corrosion rate of greater than 9 mils per year under the testing conditions; and introducing the treatment fluid into the well.

It is to be understood that the discussion of preferred embodiments regarding the treatment fluid or any ingredient in the treatment fluid, is intended to apply to the composition embodiments and the method embodiments. Any reference to the unit "gallons" means U.S. gallons.

The treatment fluid includes water. The treatment fluid can be a homogenous fluid or a heterogeneous fluid. The treatment fluid can be a colloid, such as a slurry, emulsion, or foam. If the treatment fluid is a colloid, then preferably the water is the liquid continuous phase of the colloid. The liquid continuous phase can include dissolved materials and/or undissolved solids. The water can be selected from the group consisting of freshwater, seawater, brine, and any combination thereof in any proportion.

The treatment fluid can further comprise a liquid hydrocarbon. Preferably, the liquid hydrocarbon is a dispersed phase of the treatment fluid and the water is the continuous phase. The liquid hydrocarbon can be selected from the group consisting of: a fractional distillate of crude oil; a fatty derivative of an acid, an ester, an ether, an alcohol, an amine, an amide, or an imide; a saturated hydrocarbon; an unsaturated hydrocarbon; a branched hydrocarbon; a cyclic hydrocarbon; and any combination thereof. Crude oil can be separated into fractional distillates based on the boiling point of the fractions in the crude oil. An example of a suitable fractional distillate of crude oil is diesel oil. A commercially-available example of a fatty acid ester is PETROFREE® ESTER base fluid, available from Halliburton Energy Services, Inc. in Houston, TX. The saturated hydrocarbon can be an alkane or paraffin. Preferably, the saturated hydrocarbon is a paraffin. The paraffin can be an isoalkane (isoparaffin), a linear alkane (paraffin), or a cyclic alkane (cycloparaffin). An example of an alkane is BAROID ALKANE™ base fluid, available from Halliburton Energy Services, Inc. in Houston, TX. Examples of suitable paraffins include, but are not limited to: BIO-BASE 360® (an isoalkane and n-alkane); BIO-BASE 300™ (a linear alkane); BIO-BASE 560® (a blend containing greater than 90% linear alkanes); and ESCAID 110™ (a mineral oil blend of mainly alkanes and cyclic alkanes). The BIO-BASE liquids are available from Shrieve Chemical Products, Inc. in The Woodlands, TX. The ESCAID liquid is available from ExxonMobil in Houston, TX. The unsaturated hydrocarbon can be an alkene, alkyne, or aromatic. Preferably, the unsaturated hydrocarbon is an alkene. The alkene can be an isoalkene, linear alkene, or cyclic alkene. The linear alkene can be a linear alpha olefin or an internal olefin. An example of a linear alpha olefin is NOVATEC™, available from M-I SWACO in Houston, TX. Examples of internal olefins include, ENCORE® drilling fluid and ACCOLADE® drilling fluid, available from Halliburton Energy Services, Inc. in Houston, TX.

The treatment fluids for any of the embodiments include a formate. According to an embodiment, the formate is a formate salt. The formate salt can be selected from the group consisting of lithium formate, sodium formate, potassium formate, rubidium formate, cesium formate, francium formate, and combinations thereof. According to another embodiment, the formate is an ester formate. The ester formate can be selected from the group consisting of methyl formate, ethyl formate, trimethyl orthoformate, triethyl orthoformate, and combinations thereof in any proportion.

According to an embodiment, the formate is in at least a sufficient concentration such that the treatment fluid has a density of at least 10 pounds per gallon (ppg) (1.2 kilograms per liter "kg/L"). The formate can also be in a concentration such that the treatment fluid has a density in the range of about 10 ppg to about 20 ppg (about 1.2 to about 2.4 kg/L). The formate can also be in a concentration such that the treatment fluid has a density in the range of about 12 ppg to about 18 ppg (about 1.4 to about 2.2 kg/L). According to another embodiment, the formate is in a concentration of at least 40 pounds per barrel (ppb) of the water. The formate can also be in a concentration in the range of about 40 ppb to about 120 ppb of the water. Alternatively, the formate is in a concentration in the range of about 60 ppb to about 100 ppb of the water.

The treatment fluid includes the corrosion inhibitor. According to a first embodiment, the corrosion inhibitor is capable of providing a pH of at least 10 under a testing condition of at least 100 psi (0.7 megapascals "MPa") carbon dioxide ($CO_2$) for a test fluid consisting essentially of: the water; the formate; and the corrosion inhibitor, and in the same proportions as in the treatment fluid. According to another embodiment, the corrosion inhibitor is capable of providing a pH in the range of 10 to about 14 under the same testing condition for the test fluid.

According to a first embodiment, the corrosion inhibitor is capable of also providing a corrosion rate equal to or less than 4 mils per year (mpy) under testing conditions consisting of: a temperature of 300 °F (148.9 °C); a total pressure of 500 psi (3.4 MPa), wherein carbon dioxide accounts for at least 100 psi (0.7 MPa) of the total pressure; and a time of 28 days, for the test fluid consisting essentially of: the water; the formate; and the corrosion inhibitor, and in the same proportions as in the treatment fluid, whereas a substantially identical test fluid without the corrosion inhibitor has a corrosion rate of greater than 4 mpy under the testing conditions. The test fluid can also have a corrosion rate of less than 2 mpy, preferably less than 1 mpy, under the testing conditions. The test fluid can have a corrosion rate of less than 3.5 mpy at a time of 7 days using the same temperature and pressure conditions. According to an embodiment, the corrosion inhibitor is in at least a sufficient concentration such that the test fluid has a pH of at least 10 and a corrosion rate equal to or less than 4 mpy, preferably less than 2 mpy, and more preferably less than 1 mpy, under the testing conditions. This first embodiment may be useful in situations in which it is likely that the fluid will be introduced into an acid gas or sour gas well.

The total pressure of the testing conditions is 500 psi (3.4 MPa). At least 100 psi (0.7 MPa) of the total pressure is from $CO_2$. Other gases can account for the remainder of the total pressure. For example, nitrogen ($N_2$) can account for the remainder of the total pressure. The $CO_2$ can account for from about 200 to about 400 psi (about 1.4 to about 2.8 MPa) of the total pressure. There can be other gases, in addition to $CO_2$ and $N_2$, making up the total pressure. For

example, hydrogen sulfide ($H_2S$) can also be present. The $H_2S$ can account for at least 100 psi (0.7 MPa) of the total pressure. The $H_2S$ can also account for from about 100 to about 200 psi (about 0.7 to about 1.4 MPa) of the total pressure. The combination and relative percentage of each gas making up the total pressure can vary, so long as $CO_2$ accounts for at least 100 psi of the total pressure.

According to a second embodiment, a method of treating a portion of a well comprises: forming a treatment fluid, wherein the treatment fluid comprises: (A) water; (B) a formate; (C) a scale inhibitor, wherein the scale inhibitor is capable of providing a pH of less than 9 for a first test fluid consisting essentially of: the water; the formate; and the scale inhibitor; and (D) a corrosion inhibitor, wherein the corrosion inhibitor is capable of providing: (i) a pH of at least 10; and (ii) a corrosion rate equal to or less than 9 mils per year under testing conditions consisting of: (a) a temperature of 300 °F (148.9 °C); (b) a pressure of 500 psi (3.4 MPa); and (c) a time of 28 days, for a second test fluid consisting essentially of: the water; the formate; the scale inhibitor; and the corrosion inhibitor, and in the same proportions as in the treatment fluid, whereas the first test fluid has a corrosion rate of greater than 9 mpy under the testing conditions; and introducing the treatment fluid into the well.

This second embodiment may be useful in situations where it is desirable to reduce or eliminate scale formation or remove scale. The scale inhibitor is capable of providing a pH of less than 9 for a first test fluid consisting essentially of: the water; the formate; and the scale inhibitor. The scale inhibitor can be a weak acid. As used herein, the term "weak acid" means a substance that does not ionize completely in an aqueous solution and has a pKa greater than 2 and less than 7. The scale inhibitor can be selected from the group consisting of formic acid, acetic acid, trichloroacetic acid, hydrofluoric acid, hydrocyanic acid, hydrochloric acid, and hydrobromic acid.

A scale inhibitor can decrease the pH of a fluid to a value such that scale formation is inhibited or prevented or scale is at least partially removed. However, the lower the pH of the fluid, the more corrosion can occur. Therefore, the corrosion inhibitor is capable of providing: (i) a pH of at least 10; and (ii) a corrosion rate equal to or less than 9 mpy under the aforementioned testing conditions for a second test fluid consisting essentially of: the water; the formate; the scale inhibitor; and the corrosion inhibitor, and in the same proportions as in the treatment fluid, whereas the first test fluid has a corrosion rate of greater than 9 mpy under the testing conditions. Preferably, the second test fluid has a corrosion rate equal to or less than 5 mpy, whereas the first test fluid has a corrosion rate of greater than 5 mpy.

According to an embodiment, the scale inhibitor is in at least a sufficient concentration such that the first test fluid has a pH of less than 9 and a corrosion rate greater than 9 mpy, preferably greater than 5 mpy, under the testing conditions. The scale inhibitor can be in a concentration of at least 0.5% by volume of the water. The scale inhibitor can be in a concentration in the range of about 0.5% to about 5% by volume of the water, preferably about 1% to about 4% by volume.

According to an embodiment, the corrosion inhibitor is in at least a sufficient concentration such that the second test fluid has a pH of at least 10 and a corrosion rate equal to or less than 9 mpy, preferably less than 5 mpy, under the testing conditions.

The following discussion pertains to certain embodiments for all of the composition embodiments and also for all of the method embodiments. The corrosion inhibitor can be in a concentration of at least 0.5% by volume of the water. The corrosion inhibitor can also be in a concentration in the range of about 0.5% to about 5% by volume of the water, preferably about 1% to about 4% by volume.

The corrosion inhibitor can be a weak base. As used herein, the term "weak base" means that a substance that does not ionize completely in an aqueous solution and has a pKa greater than 7 and less than 10. The corrosion inhibitor can be selected from the group consisting of carbonates, bicarbonates, hydroxides, oxides, ethanolamines, and combinations thereof in any proportion. Examples of suitable carbonates include sodium carbonate, potassium carbonate, and cesium carbonate. Examples of suitable bicarbonates include sodium bicarbonate, potassium bicarbonate, and cesium bicarbonate. Examples of suitable hydroxides include potassium hydroxide and magnesium hydroxide. Examples of suitable oxides include manganese oxide and magnesium oxide. Examples of ethanolamines include monoethanolamine (MEA), diethanolamine (DEA), and triethanolamine (TEA). A commercially-available example of MEA is BARACOR® 95, marketed by Halliburton Energy Services, Inc.

It is believed that MEA may function as a corrosion inhibitor better than DEA or TEA because the overall charge on the amine functional group is stronger with MEA compared to DEA and TEA. According to an embodiment, the corrosion inhibitor is MEA. According to another embodiment, the corrosion inhibitor is a combination of MEA and one or more selected from the group consisting of carbonates, bicarbonates, hydroxides, and oxides. According to this embodiment, the MEA is in a concentration of at least 25% by volume of the corrosion inhibitor.

The treatment fluid can include additional additives including, but not limited to, a pH buffer, a viscosifier, an emulsifier, a weighting agent, a fluid loss additive, and a friction reducer.

The treatment fluid can include a pH buffer. The pH buffer can be selected from the group consisting of magnesium oxide, potassium hydroxide, calcium oxide, and calcium hydroxide. Commercially-available examples of a pH buffer include BARABUF®, marketed by Halliburton Energy Services, Inc. The pH buffer can be in a concentration in the range of about 0.5 to about 3.0 pounds per barrel (ppb) of the treatment fluid.

The treatment fluid can further include a viscosifier. The viscosifier can be selected from the group consisting of a xanthan gum polymer, inorganic viscosifier, fatty acids, and combinations thereof. Commercially-available examples of a suitable viscosifier include, but are not limited to, BARAZAN® D PLUS, RHEMOD L®, TAU-MOD®, RM-63™, and combinations thereof, marketed by Halliburton Energy Services, Inc. According to an embodiment, the viscosifier is in a concentration of at least 0.5 ppb of the treatment fluid. The viscosifier can also be in a concentration in the range of about 0.5 to about 20 ppb, alternatively of about 0.5 to about 10 ppb, of the treatment fluid.

The treatment fluid can further include an emulsifier. The emulsifier can be selected from the group consisting of tall oil-based fatty acid derivatives, vegetable oil-based derivatives, and combinations thereof. Commercially-available examples of a suitable emulsifier include, but are not limited to, EZ MUL® NT, INVERMUL® NT, LE SUPERMUL ®, and combinations thereof, marketed by Halliburton Energy Services, Inc. According to an embodiment, the emulsifier is in at least a sufficient concentration such that the treatment fluid maintains a stable emulsion or invert emulsion. According to yet another embodiment, the emulsifier is in a concentration of at least 3 ppb of the treatment fluid. The emulsifier can also be in a concentration in the range of about 3 to about 20 ppb of the treatment fluid.

The treatment fluid can further include a weighting agent in addition to the formate. The weighting agent can be selected from the group consisting of barite, hematite, manganese tetroxide, calcium carbonate, and combinations thereof. Commercially-available examples of a suitable weighting agent include, but are not limited to, BAROID®, BARACARB®, BARODENSE®, MICROMAX™, and combinations thereof, marketed by Halliburton Energy Services, Inc. According to an embodiment, the weighting agent is in a concentration of at least 10 ppb of the treatment fluid. The weighting agent can also be in a concentration in the range of about 10 to about 20 ppb of the treatment fluid.

The treatment fluid can further include a fluid loss additive. The fluid loss additive can be selected from the group consisting of a cross-linked starch product, methylestyrene-co-acrylate, a substituted styrene copolymer, and combinations thereof. Commercially-available examples of a suitable fluid loss additive include, but are not limited to, N-DRIL™ HT PLUS, ADAPTA®, marketed by Halliburton Energy Services, Inc. The fluid loss additive can be in a concentration of at least 0.5 ppb of the treatment fluid. The fluid loss additive can also be in a concentration in the range of about 0.5 to about 10 ppb of the treatment fluid.

The treatment fluid can also include a friction reducer. Commercially-available examples of a suitable friction reducer include, but are not limited to, TORQ-TRIM® II, graphitic carbon, and combinations thereof, marketed by Halliburton Energy Services, Inc. The friction reducer can be in a concentration of at least 0.5 ppb of the treatment fluid. In an embodiment, the friction reducer is in a concentration in the range of about 0.5 to about 5 ppb of the treatment fluid.

The treatment fluid can have a pH of at least 9, preferably at least 10, more preferably at least 11. According to an embodiment, the treatment fluid has a corrosion rate of less than 5, preferably less than 4, more preferably less than 2 at a temperature of 300 °F (150 °C), a total pressure of 500 psi (3.4 MPa), and a time of 28 or 7 days. The total pressure can comprise $N_2$, $CO_2$, $H_2S$, or combinations thereof. According to another embodiment, the treatment fluid has a pH of at least 9, 10, or 11 and a corrosion rate of less than 5, 4, or 2 at the bottomhole conditions of the well. As used herein, the term "bottomhole" means the location of the well where the treatment fluid is introduced. For example, the pH of the treatment fluid may be 14 after formation of the fluid at the surface of the well; however, if the fluid encounters a sufficiently high concentration of $CO_2$ and/or $H_2S$, then the pH of the fluid can decrease. Therefore, regardless of the actual bottomhole conditions of the well, the treatment fluid can be designed such that it has a corrosion rate according to the embodiments.

The treatment fluid can be a drilling fluid, spacer fluid, completion fluid, a work-over fluid, or a packer fluid.

The methods include the step of forming the treatment fluid. The treatment fluid can be formed ahead of use or on the fly. The methods include the step of introducing the treatment fluid into the well. The step of introducing can comprise pumping the treatment fluid into the well. The well can be, without limitation, an oil, gas, or water production well, or an injection well. According to an embodiment, the well penetrates a reservoir or is located adjacent to a reservoir. The methods can further include the step of removing at least a portion of the treatment fluid after the step of introducing. The methods can include the additional steps of perforating, fracturing, or performing an acidizing treatment, after the step of introducing.

## Examples

To facilitate a better understanding of the present invention, the following examples of certain aspects of preferred embodiments are given. The following examples are not the only examples that could be given according to the present invention and are not intended to limit the scope of the invention.

Unless stated otherwise, all of the treatment fluids were mixed and tested according to the procedure for the specific test as described in The Detailed Description section above. The corrosion rate tests were conducted on mild steel plates at a temperature of 300 °F (148.9 °C) and a pressure of 500 psi (3.4 MPa) of varying gases.

**Table 1** contains initial and final pH, and corrosion rate data for several treatment fluids at a time of 7 days and 28 days. These treatment fluids were tested to determine the effectiveness of the corrosion inhibitors for use according to the first embodiment wherein the treatment fluid may encounter $CO_2$ and/or $H_2S$. The corrosion rate is expressed in units of mils per year (mpy). Each of the treatment fluids had a density of 13.1 pounds per gallon (ppg) (1.57 kg/L) and contained at least 0.34 barrels of deionized water and potassium formate at a concentration of 412.5 pounds per barrel (ppb). Treatment fluid #2 also contained 1% by volume of the water of BARACOR® 95, a monoethanolamine (MEA) as the corrosion inhibitor. Treatment fluid #3 also contained potassium carbonate at a concentration of 5 ppb and potassium bicarbonate at a concentration of 3 ppb as the corrosion inhibitor. Treatment fluid # 4 also contained: 1% by volume of BARACOR® 95, a monoethanolamine; potassium carbonate at a concentration of 5 ppb; and potassium bicarbonate at a concentration of 3 ppb as the corrosion inhibitor. The corrosion rate testing was conducted using 100 psi (0.7 MPa) of carbon dioxide ($CO_2$) and 400 psi (2.8 MPa) of nitrogen ($N_2$) as the gases.

**Table 1**

| Treatment Fluid # | Initial pH | Final pH 7 days | Corrosion rate 7 days (mpy) | Final pH 28 days | Corrosion rate 28 days (mpy) |
|---|---|---|---|---|---|
| 1 | 9.8 | 10.0 | 3.8 | 10.5 | 4.2 |
| 2 | 12.9 | 11.9 | 3.2 | 12.2 | 0.9 |
| 3 | 12.6 | 12.2 | 2.8 | 12.1 | 1.7 |
| 4 | 12.9 | 13.3 | 0.8 | 12.8 | 0.6 |

As can be seen in **Table 1,** treatment fluid #1 that did not contain a corrosion inhibitor had a corrosion rate of 4.2 mpy at 28 days. Treatment fluid #2 containing MEA as the corrosion inhibitor had a corrosion rate of only 0.9 mpy compared to treatment fluid #3 containing potassium carbonate and potassium bicarbonate as the corrosion inhibitor, which had a corrosion rate of 1.7 mpy at 28 days. This indicates that MEA works better as a corrosion inhibitor compared to potassium carbonate and potassium bicarbonate. Moreover, as can be seen, the combination of MEA and potassium carbonate and potassium bicarbonate lowered the corrosion rate to 0.6 mpy at 28 days. This indicates that MEA can be even more effective by adding another corrosion inhibitor.

**Table 2** contains initial and final pH, and corrosion rate data for several treatment fluids. These treatment fluids were tested for the effectiveness of the corrosion inhibitors when a scale inhibitor is included in the fluid. Each of the treatment fluids had a density of 12.5 ppg (1.5 kg/L) and contained at least: 0.34 barrels of deionized water; 0.54 bbl of potassium formate brine at a specific gravity of 1.57 (concentration of 0.85 pounds per barrel (ppb)); sodium formate at a concentration of 87.63 ppb; potassium hydroxide at a concentration of 1 ppb; BARABUF® pH buffer of magnesium oxide at a concentration of 1.75 ppb; N-DRIL™ HT PLUS fluid loss additive of a cross-linked starch product at a concentration of 5.26 ppb; BARAZAN® D PLUS viscosifier of a powdered xanthan gum polymer at a concentration of 1.75 ppb; and possibly a scale inhibitor and also possibly a corrosion inhibitor. The "untreated" fluids, #1 and #2 did not contain a scale inhibitor. Treatment fluid #2 also contained 1% by volume of the water of BARACOR® 95, a monoethanolamine (MEA) as the corrosion inhibitor. The "treated" fluids, #3, #4, and #5 contained 1% by volume of the water of formic acid as the scale inhibitor. Treatment fluid #4 also contained 1% by volume of BARACOR® 95, a monoethanolamine (MEA) as the corrosion inhibitor. Treatment fluid #5 also contained 1% by volume of triethanolamine (TEA) as the corrosion inhibitor. The corrosion rate testing was conducted using 500 psi (3.4 MPa) of nitrogen ($N_2$) as the gas and a time of 10 days.

**Table 2**

| Treatment Fluid # | Initial pH | Final pH | Corrosion rate (mpy) |
|---|---|---|---|
| 1- Untreated | 13.8 | 11.0 | 1.0 |
| 2- Untreated + MEA | 13.6 | 11.9 | 0.7 |
| 3- Treated | 7.9 | 8.1 | 10.8 |
| 4- Treated + MEA | 11.6 | 10.8 | 2.0 |
| 5- Treated + TEA | 9.0 | 8.9 | 8.7 |

As can be seen in **Table 2,** treatment fluid #3 containing the scale inhibitor had a pH of approximately 8 and a corrosion rate of 10.8 mpy. Treatment fluid #4 containing the scale inhibitor and MEA as the corrosion inhibitor had a higher final pH of 10.8 and a corrosion rate of only 2.0 mpy compared to treatment fluid #3. Moreover, treatment fluid #4 had only a slightly higher corrosion rate compared to treatment fluid #2 that did not contain the scale inhibitor. This indicates that MEA works effectively as a corrosion inhibitor in a treatment fluid that does not contain a scale inhibitor and also a treatment fluid that does contain a scale inhibitor. Treatment fluid #5 containing TEA as the corrosion inhibitor had a lower corrosion rate compared to fluid #3, but a higher rate compared to fluid #4. This indicates that MEA may be a more effective corrosion inhibitor in a fluid containing a scale inhibitor compared to TEA.

Therefore, the present invention is well adapted to attain the ends and advantages mentioned as well as those that are inherent therein. The particular embodiments disclosed above are illustrative only, as the present invention may be modified and practiced in different but equivalent manners apparent to those skilled in the art having the benefit of the teachings herein. Furthermore, no limitations are intended to the details of construction or design herein shown, other than as described in the claims below. It is, therefore, evident that the particular illustrative embodiments disclosed above may be altered or modified and all such variations are considered within the scope and spirit of the present invention. While compositions and methods are described in terms of "comprising," "containing," or "including" various components or steps, the compositions and methods also can "consist essentially of" or "consist of" the various components and steps. Whenever a numerical range with a lower limit and an upper limit is disclosed, any number and any included range falling within the range is specifically disclosed. In particular, every range of values (of the form, "from about a to about b," or, equivalently, "from approximately a to b," or, equivalently, "from approximately a to b") disclosed herein is to be understood to set forth every number and range encompassed within the broader range of values. Also, the terms in the claims have their plain, ordinary meaning unless otherwise explicitly and clearly defined by the patentee. Moreover, the indefinite articles "a" or "an", as used in the claims, are defined herein to mean one or more than one of the element that it introduces. If there is any conflict in the usages of a word or term in this specification and one or more patent(s) or other documents that may be incorporated herein by reference, the definitions that are consistent with this specification should be adopted.

Embodiments of the invention:

1. A method of treating a portion of a well comprising:

forming a treatment fluid, wherein the treatment fluid comprises:

(A) water;
(B) a formate; and
(C) a corrosion inhibitor, wherein the corrosion inhibitor is capable of providing:

(i) a pH of at least 10 under a testing condition of at least 100 psi (0.7 MPa) carbon dioxide; and
(ii) a corrosion rate equal to or less than 4 mils per year (mpy) under testing conditions consisting of:

(a) a temperature of 300 °F (148.9 °C);
(b) a total pressure of 500 psi (3.4 MPa), wherein carbon dioxide accounts for at least 100 psi (0.7 MPa) of the total pressure; and
(c) a time of 28 days,

for a test fluid consisting essentially of: the water; the formate; and the corrosion inhibitor, and in the same proportions as in the treatment fluid,
whereas a substantially identical test fluid without the corrosion inhibitor has a pH of less than 10 and a corrosion rate of greater than 4 mils per year under the testing conditions; and introducing the treatment fluid into the well.

2. The method according to 1, wherein the water is selected from the group consisting of freshwater, seawater, brine, and any combination thereof in any proportion.

3. The method according to 1, wherein the treatment fluid is a homogenous fluid.

4. The method according to 1, wherein the treatment fluid is a heterogeneous fluid and wherein the water is the continuous phase of the treatment fluid.

5. The method according to 4, wherein the treatment fluid is a slurry, emulsion, or foam.

6. The method according to 1, wherein the formate is a formate salt.

7. The method according to 6, wherein the formate salt is selected from the group consisting of lithium formate, sodium formate, potassium formate, rubidium formate, cesium formate, francium formate, and combinations thereof in any proportion.

8. The method according to 1, wherein the formate is in a concentration such that the treatment fluid has a density in the range of about 10 pounds per gallon (ppg) to about 20 ppg (about 1.2 to about 2.4 kilograms per liter).

9. The method according to 1, wherein the formate can also be in a concentration in the range of about 40 pounds per barrel (ppb) to about 120 ppb of the water.

10. The method according to 1, wherein the corrosion inhibitor is capable of providing a pH in the range of 10 to about 14 under the testing conditions.

11. The method according to 1, wherein the test fluid has a corrosion rate of less than 2 mpy under the testing conditions.

12. The method according to 1, wherein the test fluid has a corrosion rate of less than 3.5 mpy at a time of 7 days under the same temperature and pressure conditions.

13. The method according to 1, wherein the carbon dioxide accounts for from about 200 to about 400 psi (about 1.4 to about 2.8 MPa) of the total pressure.

14. The method according to 1, wherein the corrosion inhibitor can be a weak base.

15. The method according to 1, wherein the corrosion inhibitor is in at least a sufficient concentration such that the test fluid has a pH of at least 10 and a corrosion rate equal to or less than 4 mpy.

16. The method according to 1, wherein the corrosion inhibitor is in a concentration in the range of about 0.5% to about 5% by volume of the water.

17. The method according to 1, wherein the corrosion inhibitor is selected from the group consisting of carbonates, bicarbonates, hydroxides, oxides, ethanolamines, and combinations thereof in any proportion.

18. A method of treating a portion of a well comprising:

   forming a treatment fluid, wherein the treatment fluid comprises:

      (A) water;
      (B) a formate;
      (C) a scale inhibitor, wherein the scale inhibitor is capable of providing a pH of less than 9 for a first test fluid consisting essentially of: the water; the formate; and the scale inhibitor; and
      (D) a corrosion inhibitor, wherein the corrosion inhibitor is capable of providing:

         (i) a pH of at least 10; and
         (ii) a corrosion rate equal to or less than 9 mils per year (mpy) under testing conditions consisting of:

            (a) a temperature of 300 °F (148.9 °C);
            (b) a pressure of 500 psi (3.4 MPa); and
            (c) a time of 28 days,

         for a second test fluid consisting essentially of: the water; the formate; the scale inhibitor; and the corrosion inhibitor, and in the same proportions as in the treatment fluid, whereas the first test fluid has a corrosion rate of greater than 9 mils per year under the testing conditions; and

   introducing the treatment fluid into the well.

19. The method according to 18, wherein the scale inhibitor is a weak acid.

20. The method according to 18, wherein the scale inhibitor is selected from the group consisting of formic acid, acetic acid, trichloroacetic acid, hydrofluoric acid, hydrocyanic acid, hydrochloric acid, and hydrobromic acid.

21. The method according to 18, wherein the second test fluid has a corrosion rate equal to or less than 5 mpy, whereas the first test fluid has a corrosion rate of greater than 5 mpy.

22. The method according to 18, wherein the scale inhibitor is in at least a sufficient concentration such that the first test fluid has a pH of less than 9 and a corrosion rate greater than 9 mpy under the testing conditions.

23. The method according to 18, wherein the scale inhibitor is in a concentration in the range of about 0.5% to about 5% by volume of the water.

24. The method according to 18, wherein the corrosion inhibitor is in at least a sufficient concentration such that the second test fluid has a pH of at least 10 and a corrosion rate equal to or less than 4 mpy under the testing conditions.

25. The method according to 18, wherein nitrogen gas accounts for 500 psi (3.4 MPa) of the pressure.

26. A treatment fluid comprising:

water;
a formate; and
a corrosion inhibitor, wherein the corrosion inhibitor is capable of providing:

(A) a pH of at least 10 under a testing condition of at least 100 psi (0.7 MPa) carbon dioxide; and
(B) a corrosion rate equal to or less than 4 mils per year under testing conditions consisting of:

(i) a temperature of 300 °F (148.9 °C);
(ii) a total pressure of 500 psi (3.4 MPa), wherein carbon dioxide accounts for at least 100 psi (0.7 MPa) of the total pressure; and
(iii) a time of 28 days,

for a test fluid consisting essentially of: the water; the formate; and the corrosion inhibitor, and in the same proportions as in the treatment fluid, whereas a substantially identical test fluid without the corrosion inhibitor has a pH of less than 10 and a corrosion rate of greater than 4 mils per year under the testing conditions.

**Claims**

1. A method of treating a portion of a well comprising:

forming a treatment fluid, wherein the treatment fluid comprises:

(A) water;
(B) a formate;
(C) a scale inhibitor, wherein the scale inhibitor is capable of providing a pH of less than 9 for a first test fluid consisting essentially of the water, the formate and the scale inhibitor; and
(D) a corrosion inhibitor capable of providing:

(i) a pH of at least 10, and
(ii) a corrosion rate equal to or less than 9 mils per year (mpy) ($7.25 \times 10^{-12}$ m/s) under testing conditions consisting of:

(a) a temperature of 300°F (148.9°C),
(b) a pressure of 500 psi (3.4 MPa), and
(c) a time of 28 days,

for a second test fluid consisting essentially of the water, the formate, the scale inhibitor and the corrosion inhibitor in the same proportions as in the treatment fluid,
whereas the first test fluid has a corrosion rate greater than 9 mpy ($7.25 \times 10^{-12}$ m/s) under the testing conditions; and

introducing the treatment fluid into the well.

2. A method according to Claim 1, wherein the scale inhibitor is a weak acid which has a pKa greater than 2 and less than 7.

3. A method according to Claim 1, wherein the scale inhibitor is selected from formic acid, acetic acid, trichloroacetic acid, hydrofluoric acid, hydrocyanic acid, hydrochloric acid and hydrobromic acid.

4. A method according to Claim 1, wherein the second test fluid has a corrosion rate equal to or less than 5 mpy ($4.03 \times 10^{-12}$ m/s), whereas the first test fluid has a corrosion rate greater than 5 mpy ($4.03 \times 10^{-12}$ m/s).

5. A method according to Claim 1, wherein the scale inhibitor is present in a concentration such that the first test fluid has a pH of less than 9 and a corrosion rate greater than 9 mpy ($7.25 \times 10^{-12}$ m/s) under the testing conditions.

6. A method according to Claim 1, wherein the scale inhibitor is present in a concentration in the range of 0.5% to 5% by volume of the water.

7. A method according to Claim 6, wherein the scale inhibitor is present in a concentration in the range of 1% to 4% by volume of the water.

8. A method according to Claim 1, wherein the corrosion inhibitor is present in a concentration such that the second test fluid has a pH of at least 10 and a corrosion rate equal to or less than 4 mpy ($3.22 \times 10^{-12}$ m/s) under the testing conditions.

9. A method according to Claim 1, wherein the corrosion inhibitor is present in a concentration in the range of 0.5% to 5% by volume of the water.

10. A method according to Claim 9, wherein the corrosion inhibitor is present in a concentration in the range of 1% to 4% by volume of the water.

11. A method according to Claim 1, wherein nitrogen gas accounts for 500 psi (3.4 MPa) of the pressure.

12. A method according to Claim 1, wherein the corrosion inhibitor is a weak base having a pKa greater than 7 and less than 10.

13. A method according to Claim 1, wherein the corrosion inhibitor is selected from a carbonate, a bicarbonate, a hydroxide, an oxide, an ethanolamine, and any combination thereof.

14. A method according to Claim 13, wherein the corrosion inhibitor comprises an ethanolamine.

15. A method according to Claim 14, wherein the corrosion inhibitor comprises monoethanolamine.

Europäisches
Patentamt

European
Patent Office

Office européen
des brevets

## EUROPEAN SEARCH REPORT

Application Number

EP 14 18 7019

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 3 953 340 A (TEMPLETON CHARLES C ET AL) 27 April 1976 (1976-04-27) <br> * column 9, lines 62-68; example 1 * <br> * the whole document * <br> ----- | 1-15 | INV. <br> C09K8/54 <br> C09K8/52 <br> C09K8/528 <br> E21B43/00 |
| X | US 2009/247431 A1 (GUPTA D V [US] ET AL GUPTA D V SATYANARAYANA [US] ET AL) 1 October 2009 (2009-10-01) <br> * paragraphs [0034], [0035]; claims 1,11,20, 8 * <br> * the whole document * <br> ----- | 1-15 | |
| X | US 2006/243449 A1 (WELTON THOMAS D [US] ET AL) 2 November 2006 (2006-11-02) <br> * claims 1,4,8 * <br> ----- | 1-15 | |

|  |  |
|---|---|
|  | TECHNICAL FIELDS SEARCHED (IPC) |
|  | C09K |

The present search report has been drawn up for all claims

| Place of search | Date of completion of the search | Examiner |
|---|---|---|
| The Hague | 28 November 2014 | Straub, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# EP 2 821 457 A1

## ANNEX TO THE EUROPEAN SEARCH REPORT
## ON EUROPEAN PATENT APPLICATION NO.

EP 14 18 7019

This annex lists the patent family members relating to the patent documents cited in the above-mentioned European search report.
The members are as contained in the European Patent Office EDP file on
The European Patent Office is in no way liable for these particulars which are merely given for the purpose of information.

28-11-2014

| Patent document cited in search report | | Publication date | Patent family member(s) | | Publication date |
|---|---|---|---|---|---|
| US 3953340 | A | 27-04-1976 | NONE | | |
| US 2009247431 | A1 | 01-10-2009 | US | 2009247431 A1 | 01-10-2009 |
| | | | US | 2011224111 A1 | 15-09-2011 |
| US 2006243449 | A1 | 02-11-2006 | NONE | | |

EPO FORM P0459

For more details about this annex : see Official Journal of the European Patent Office, No. 12/82

**EP 2 821 457 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 13371142 B